# EUROPÄISCHE PATENTSCHRIFT

(11) **EP 3 329 241 B1**
(45) Veröffentlichungstag und Bekanntmachung des Hinweises auf die Patenterteilung: **15.05.2019**
(21) Anmeldenummer: 16765913.5
(22) Anmeldetag: 14.07.2016
(51) Int. Cl.: G01M 11/06, G01M 17/007

(54) **LICHTDIAGNOSE MITTELS EINES KAMERASYSTEMS EINES FAHRZEUGS**
LIGHT DIAGNOSIS BY MEANS OF A CAMERA SYSTEM OF A VEHICLE
DIAGNOSTIC DES FEUX AU MOYEN D'UN SYSTÈME DE CAMÉRA(S) D'UN VÉHICULE

(30) Priorität: 29.07.2015 DE 102015214332
(43) Veröffentlichungstag der Anmeldung: 06.06.2018
(73) Patentinhaber: Conti Temic Microelectronic GmbH, 90411 Nürnberg (DE)
(72) Erfinder: HASSENPFLUG, Christoph, 31141 Hildesheim (DE)
(86) Internationale Anmeldenummer: PCT/DE2016/200324
(87) Internationale Veröffentlichungsnummer: WO 2017/016557

(56) Entgegenhaltungen:
- DE-A1-102008 025 530
- DE-A1-102008 031 159
- US-A1- 2003 107 323
- US-A1- 2004 167 697

## Beschreibung

Die Erfindung betrifft ein Verfahren zur Ermittlung des Funktionszustands der Lichtanlage eines Fahrzeugs nach dem Oberbegriff des Anspruchs 1 sowie eine entsprechende Vorrichtung nach dem Oberbegriff des Anspruchs 8.

Bislang erfolgt die Überprüfung des Funktionszustands der Lichtanlage eines Fahrzeugs entweder in regelmäßigen Serviceintervallen direkt beim Fahrzeughändler oder bei Drittanbietern, beispielsweise bei einem staatlich anerkannten technischen Überwachungsverein (in Deutschland: TÜV) oder in einer freien Werkstatt, wobei jedes Mal spezielle Prüfeinrichtungen zum Einsatz kommen. Aus der Druckschrift DE102008025530 ist z.B. eine fahrzeugexterne Anordnung einer Prüfeinrichtung vorgesehen.

Aus der Druckschrift DE 10 2008 031 159 A1 ist bereits ein Verfahren zur Dejustageerkennung eines Scheinwerfers eines Fahrzeugs bekannt, wobei ein am oder im Fahrzeug angeordnetes Kamerasystem derart ausgerichtet ist, dass das Lichtverteilungsmuster des Scheinwerfers vor dem Fahrzeug erfasst wird, bei einer vorgegebenen Scheinwerferposition ein Ist-Lichtverteilungsmuster des Scheinwerfers mit dem Kamerasystem aufgenommen und mit einem Soll-Lichtverteilungsmuster für die vorgegebene Scheinwerferposition verglichen wird, und bei Abweichung des Ist-Lichtverteilungsmusters von dem Soll-Lichtverteilungsmuster eine Dejustage des Scheinwerfers erkannt wird.

Da in Fahrzeugen mittlerweise immer häufiger Kamerasysteme zum Einsatz kommen, ist mit dem in der Druckschrift DE 10 2008 031 159 A1 beschriebenen Verfahren somit eine Überprüfung der Frontscheinwerfer möglich, ohne diese beim Händler oder einem Dritten durchführen zu lassen, und ohne dass spezielle Prüfeinrichtungen zum Einsatz kommen müssen. Mit dem aus der Druckschrift DE 10 2008 031 159 A1 bekannten Verfahren ist jedoch lediglich eine Überprüfung der Funktion der Frontscheinwerfer möglich sowie lediglich eine Dejustageerkennung. Der Stand der Technik wird weiter noch durch folgende Dokumente wiedergegeben : US2003/107323 und US 2004/167697.

Aufgabe der Erfindung ist es, das bekannte Verfahren derart weiterzubilden, dass vorzugsweise die gesamte Lichtanlage eines Fahrzeugs überprüft werden kann, und dass vorzugsweise eine Überprüfung der Lichtanlage hinsichtlich verschiedener Funktionszustände erfolgt.

Diese Aufgabe wird erfindungsgemäß durch ein Verfahren zur Ermittlung von Funktionszuständen von Lichtabgabeeinrichtungen eines Fahrzeugs mittels eines Kamerasystems gelöst, wobei mittels wenigstens einer seitlich oder rückwärtig am oder im Fahrzeug angeordneten Kamera eines Kamerasystems Bilddaten aus wenigstens einem seitlichen oder rückwärtigen Bereich um das Fahrzeug erfasst werden und mittels Bildverarbeitung der Bilddaten wenigstens ein Funktionszustand wenigstens einer in dem seitlichen oder rückwärtigen Bereich des Fahrzeugs angeordneten Lichtabgabeeinrichtung ermittelt wird.

Unter Lichtabgabeeinrichtungen sind im Rahmen der Erfindung sämtliche lichttechnischen Einreichungen zu verstehen, die an Fahrzeugen verbaut werden, d.h. sowohl die Standardbeleuchtung, die heutzutage für die jeweilige Fahrzeugart vorgeschrieben ist, aber auch zusätzliche Beleuchtungseinrichtungen. Zu Lichtabgabeeinrichtungen zählen somit insbesondere gängige Fahrzeugbeleuchtungen, wie Fernlicht, Abblendlicht, Standlicht, Parklicht, Fahrtrichtungsanzeiger (vorne, hinten und seitlich), Nebelscheinwerfer, Kurvenlicht, Weitstrahler, Tagfahrlicht, Fahrzeugkennzeichenbeleuchtung, Schlussleuchten, Bremsleuchten, Rückstrahler, Nebelschlussleuchten, Rückfahrscheinwerfer und Seitenmarkierungsleuchten.

Das erfindungsgemäße Verfahren kann beispielsweise mittels Software und entsprechenden Bildverarbeitungsalgorithmen in einem unabhängigen bzw. autarken Steuergerät implementiert sein, oder aber in dem Steuergerät eines weitere Funktionen umfassenden Fahrerassistenzsystems in einem Fahrzeug. Im Rahmen des Verfahrens können dabei sowohl Rohbilddaten verarbeitet werden und/oder bereits vorverarbeitete Bilddaten, beispielsweise bereits unter Berücksichtigung intrinsischer Kameraparameter korrigierte und/oder unter Berücksichtigung extrinsischer Kameraparameter transformierte Bilddaten.

Bei der wenigstens einen Kamera kann es sich beispielsweise um eine seitlich oder rückwärtig im Außenbereich des Fahrzeugs verbaute Kamera handeln sowie vorzugsweise um eine für weitere Fahrerassistenzfunktionen verwendete Kamera, beispielsweise eine Seitenspiegelersatz-Kamera oder eine Rückfahrkamera.

Bevorzugt wird im Rahmen des erfindungsgemäßen Verfahrens ein Kamerasystem verwendet, welches mehrere Einzelkameras umfasst, die zusammen das gesamte Umfeld um das Fahrzeug erfassen, d.h. mehrere Kameras mit überlappenden Sichtbereichen, die den vorderen, hinteren sowie die seitlichen Umgebungsbereiche um das Fahrzeug erfassen. Ein solches Kamerasystem findet insbesondere bei bekannten Surround View Systemen Anwendung, wobei die von den einzelnen Kameras erfassten Bilder von einem zentralen Steuergerät zu einem Gesamtbild zusammengesetzt werden, welches wiederum transformiert und den Fahrzeuginsassen angezeigt wird, insbesondere in Form einer sogenannten Surround View (Rundumsichtdarstellung) oder in Form einer Top View Darstellung (Darstellung der Fahrzeugumgebung aus der Vogelperspektive). In diesem Fall kann das erfindungsgemäße Verfahren die Kameras eines solchen Surround View Systems nutzen und direkt in dem Steuergerät des Surround View Systems implementiert sein.

Bei dem erfassten seitlichen oder rückwärtigen Bereich des Fahrzeugs handelt es sich bevorzugt um einen direkt an das Fahrzeug angrenzenden Bereich der Fahrzeugumgebung. Der erfasste seitliche und rückwärtige Bereich kann insbesondere Bereiche der Fahrbahnoberfläche sowie Bereiche des Fahrzeugs bzw. der Fahrzeugkarosserie, insbesondere den Bereich in dem die Kamera angeordnet ist und im Sichtfeld der Kamera liegt, einschließen.

Das erfindungsgemäße Verfahren kann sowohl passiv als auch aktiv umgesetzt werden. Unter der passiven Umsetzung ist insbesondere eine Umsetzung zu verstehen, bei der das Steuergerät, beispielsweise über eine Verbindung mit dem Fahrzeug-BUS, eine Information erhält, welche Lichtabgabeeinrichtungen aktuell eingeschaltet sind. Daraufhin kann mittels des Verfahrens entweder einmalig oder in regelmäßigen bzw. definierten Abständen der Funktionszustand der entsprechenden Lichtabgabeeinrichtungen ermittelt werden. Unter der aktiven Umsetzung ist demgegenüber eine Umsetzung zu verstehen, bei der das Steuergerät, beispielsweise ebenfalls über den Fahrzeugs-BUS oder über andere Steuerungseinrichtungen, eine oder mehrere Lichtabgabeeinrichtungen gleichzeitig oder nacheinander mittels entsprechender Steuerbefehle ansteuert bzw. einschaltet und daraufhin den Funktionszustand der entsprechenden Lichtabgabeeinrichtungen ermittelt.

Gemäß einer bevorzugten Ausgestaltung des erfindungsgemäßen Verfahrens ist eine Diagnosefunktion vorgesehen, bei der verschiedene Lichtabgabeeinrichtungen nacheinander angesteuert werden und die Bildverarbeitung derart mit der Ansteuerung synchronisiert ist, dass nacheinander der Funktionszustand der verschiedenen Lichtabgabeeinrichtungen ermittelt wird. Somit kann die Steuerungseinrichtung ein kurzes Aufleuchten der einzelnen Lichtabgabeeinrichtungen anfordern und genau kontrollieren, z.B. ob die einzelnen Lichtabgabeeinrichtungen voll funktionsfähig sind und beispielsweise genug Licht produzieren.

Die Ermittlung des Funktionszustands kann im Rahmen des erfindungsgemäßen Verfahrens durch direkte Erfassung der Lichtabgabe der Lichtabgabeeinrichtung in den Bilddaten erfolgen und/oder durch indirekte Erfassung der Lichtabgabe der Lichtabgabeeinrichtung in den Bilddaten.

Die Ermittlung des Funktionszustands durch direkte Erfassung der Lichtabgabe der Lichtabgabeeinrichtung ist insbesondere dann möglich, wenn sich die Lichtabgabeeinrichtung im Sichtfeld (auch als Field-of-View (FOV) bezeichnet) einer oder mehrerer Kameras befindet. Dies kann beispielsweise bei einer seitlich am Fahrzeug angeordneten Kamera für die seitlichen Fahrtrichtungsanzeiger und Seitenmarkierungsleuchten der Fall sein, oder beispielsweise bei einer rückwärtig am Fahrzeug angeordneten Kamera für die nach hinten gerichteten Lichtabgabeeinrichtungen, wie Bremsleuchten, Rückleuchten, Rückfahrleuchten, Kennzeichenbeleuchtung oder hintere Fahrtrichtungsanzeiger. In diesem Fall kann z.B. mittels entsprechend ausgebildeter Bildverarbeitungsalgorithmen, insbesondere in definierten Bild- bzw. Pixelbereichen (auch als Region-of-Interest (ROI) bezeichnet) ermittelt werden, ob in diesen Bereichen definierte Helligkeitsschwellwerte überschritten werden, die einen eingeschalteten Zustand der in diesem Bereich befindlichen Lichtabgabeeinrichtung indizieren.

Die Ermittlung des Funktionszustands durch indirekte Erfassung der Lichtabgabe der Lichtabgabeeinrichtungen ist insbesondere dann erforderlich, wenn sich die Lichtabgabeeinrichtungen nicht im Sichtfeld der einen oder mehreren Kameras befindet. Insbesondere in diesem Fall kann die Ermittlung des Funktionszustands beispielsweise über eine Auswertung der Reflexion der Lichtabgabe auf der Fahrbahnoberfläche, an Umgebungsobjekten oder am Fahrzeug selbst erfolgen. Bei einer Auswertung der Reflexion der Lichtabgabe auf der Fahrbahnoberfläche ist es z.B. möglich, insbesondere unter Berücksichtigung der intrinsischen und extrinsischen Kameraparameter, im Rahmen der Bildverarbeitung ein Helligkeitsdifferenziertes Rasterbild, d.h. ein Beleuchtungsstärkebild, der Fahrbahnoberfläche zu erzeugen. Bei bekanntem oder angenommenen Reflexionsgrad der Fahrbahnoberfläche können insbesondere für definierte Bildbereiche (ROI's), in denen bei eingeschalteter Lichtabgabeeinrichtung eine zumindest graduelle Reflexion des von der Lichtabgabeeinrichtung abgegebenen Lichts zu erwarten ist, z.B. Helligkeitsschwellwerte festgelegt sein, die ein eingeschalteten Zustand der jeweiligen Lichtabgabeeinrichtung indizieren.

Sowohl bei der direkten Erfassung der Lichtabgabe wie auch bei der indirekten Erfassung der Lichtabgabe kann, alternativ oder zusätzlich zur Verwendung von Helligkeitsschwellwerten, zudem ermittelt werden, ob in den definierten Bild- bzw. Pixelbereichen zwischen aufeinanderfolgenden Bildern signifikante Helligkeitssprünge auftreten, insbesondere zwischen Bildern, die bei eingeschalteter und bei ausgeschalteter Lichtabgabeeinrichtung aufgenommen wurden.

Neben der Überprüfung von solchen Helligkeitssprüngen oder den davor beschriebenen Helligkeitsschwellwerten, können insbesondere auch die Farbwerte der Bildpixel ausgewertet werden, insbesondere hinsichtlich der zugehörigen Leuchtfarbe der jeweiligen Lichtabgabeeinrichtung.

Der Bildbereich (ROI) in welchem die Erfassung der Lichtabgabe einer bestimmten Lichtabgabeeinrichtung zu erwarten ist, ist aufgrund der bekannten extrinsischen Parameter der Kamera, insbesondere aufgrund der bekannten Einbauposition und Ausrichtung der Kamera am Fahrzeug, in der Regel genau bekannt. Alternativ oder zusätzlich kann die ermittelte Lichtabgabe auch durch die signifikante Farbe der einzelnen Leuchten (Rot/Weiß/Gelb bzw. Orange) genau einer spezifischen Lichtabgabeeinrichtung zugeordnet werden.

Im Rahmen des erfindungsgemäßen Verfahrens ist es insbesondere möglich verschiedene Funktionszustände der Lichtabgabeeinrichtungen eines Fahrzeugs zu ermitteln.

Gemäß einer bevorzugten Ausgestaltung handelt es sich bei der Ermittlung des Funktionszustandes zumindest um eine Überprüfung der Funktionsbereitschaft der jeweiligen Lichtabgabeeinrichtung, d.h. um eine Ermittlung, ob durch die jeweilige Lichtabgabeeinrichtung bei Steuerung in einen eingeschalteten Zustand auch tatsächlich eine Lichtabgabe erfolgt, insbesondere mit einer definierten Mindestlichtstärke. Hierfür kann, sowohl bei der direkten Erfassung der Lichtabgabeeinrichtung als auch bei der indirekten Erfassung der Lichtabgabe anhand von Reflexionen, ein Helligkeitsschwellwert definiert sein, der die Funktionsbereitschaft der jeweiligen Lichtabgabeeinrichtung indiziert.

Gemäß einer bevorzugten Ausgestaltung handelt es sich bei der Ermittlung des Funktionszustandes zumindest um eine Überprüfung der Leuchtcharakteristik der jeweiligen Lichtabgabeeinrichtung. Hierbei können z.B. Farbwerte und Helligkeit in den für jeweilige Lichtabgabeeinrichtung definierten Bildbereichen ermittelt bzw. zwischen mehreren Bildaufnahmezeitpunkten verglichen werden und es können anhand von Schwellwerten die Lichtfarbe und die Lichtstärke der jeweiligen Lichtabgabeeinrichtungen ermittelt werden. Dabei kann insbesondere überprüft werden, ob die jeweilige Lichtabgabeeinrichtung eine korrekte oder zumindest ausreichende Lichtfarbe und/oder Lichtstärke aufweist.

Im Rahmen des erfindungsgemäßen Verfahrens können insbesondere für jede Lichtabgabeeinrichtung einer oder mehrere Soll-Lichtabgabecharakteristiken in einem Speicher hinterlegt sein und zur Ermittlung des Funktionszustands mit einer erfassten Ist-Lichtabgabe verglichen werden. Somit ist es möglich, bei der Ermittlung des Funktionszustands alternativ oder zusätzlich zu verschiedenen Funktionszuständen (wie Funktionsbereitschaft, Lichtfarbe und Lichtstärke) beispielsweise auch eine Unterscheidung zu treffen, zwischen einer Defekten und einer lediglich verschmutzen Lichtabgabeeinrichtung (beispielsweise durch Schnee, Eis oder andere Ablagerungen). Bei Feststellung, dass eine Lichtabgabeeinrichtung lediglich verschmutzt ist, können geeignete Maßnahmen ergriffen werden, beispielsweise die Ansteuerung einer Scheinwerferreinigungsanlage.

Die Erfindung umfasst auch eine Vorrichtung, die zur Ermittlung von Funktionszuständen von Lichtabgabeeinrichtungen eines Fahrzeugs mittels eines Kamerasystems und zur Umsetzung eines Verfahrens nach den vorangehend beschriebenen Ausgestaltungen ausgebildet ist. Hierzu umfasst die Vorrichtung wenigstens eine Steuereinrichtung, in der geeignete Bildverarbeitungsalgorithmen, insbesondere in Form von Software hinterlegt sind, und die wenigstens eine Schnittstelle zum Empfang von Bilddaten wenigstens einer seitlich oder rückwärtig am Fahrzeug angeordneten Kamera aufweist.

Wesentlicher Vorteil der Erfindung ist es, dass auf einfache Art und Weise, insbesondere mittels vorhandener bzw. auch für andere Fahrerassistenzfunktionen verwendete Fahrzeugkameras, eine Ermittlung des Funktionszustands einzelner Lichtabgabeeinrichtungen sowie vorzugsweise der gesamten Lichtanlage eines Fahrzeugs erfolgen kann. Es kann beispielsweise vorgesehen sein, dass der Fahrer eine Ausgabe (optisch und/oder akustisch) erhält, wenn eine Lichtabgabeeinrichtung einen Defekt oder eine auffälligen Funktionszustand aufweist (z.B. nur eine geringe Lichtstärke). Bislang bemerkt ein Fahrer derartige Defekte in der Regel erst sehr spät, wie man an der hohen Anzahl an defekten rückwärtigen Fahrzeugleuchten im Straßenverkehr bemerkt. Für eine vom Umgebungslicht unabhängige Ermittlung des Funktionszustands der Lichtabgabeeinrichtungen kann im Rahmen des Verfahrens zudem noch die Umgebungshelligkeit und beispielsweise die Farbe des Fahrbahnuntergrunds berücksichtigt werden. Vorteilhaft ist insbesondere ein zweistufiges Verfahren bei dem zunächst ermittelt wird, ob die jeweilige Lichtabgabeeinrichtung funktioniert, durch erfassen der richtigen Lichtfarbe im richtigen Bildbereich zu richtigen Zeit, woraufhin dann ermittelt werden kann, ob die Leuchtstärke der jeweiligen Lichtabgabeeinrichtung auch ausreichend ist.

## Patentansprüche

1. Verfahren zur Ermittlung von Funktionszuständen von Lichtabgabeeinrichtungen eines Fahrzeugs mittels eines Kamerasystems,
**dadurch gekennzeichnet, dass**
mittels wenigstens einer seitlich oder rückwärtig am oder im Fahrzeug angeordneten Kamera eines Kamerasystems Bilddaten aus wenigstens einem seitlichen oder rückwärtigen Bereich um das Fahrzeug erfasst werden,
und dass mittels Bildverarbeitung der Bilddaten wenigstens ein Funktionszustand wenigstens einer im entsprechenden seitlichen oder rückwärtigen Bereich des Fahrzeugs angeordneten Lichtabgabeeinrichtung ermittelt wird.

2. Verfahren nach Anspruch 1, **dadurch gekennzeichnet, dass** eine Diagnosefunktion vorgesehen ist, bei der verschiedene Lichtabgabeeinrichtungen nacheinander angesteuert werden und die Bildverarbeitung derart mit der Ansteuerung synchronisiert ist, dass nacheinander der Funktionszustand der verschiedenen Lichtabgabeeinrichtungen ermittelt wird.

3. Verfahren nach einem der vorangegangenen Ansprüche, **dadurch gekennzeichnet, dass**
die Ermittlung des Funktionszustands durch direkte Erfassung der Lichtabgabe der Lichtabgabeeinrichtung in den Bilddaten erfolgt.

4. Verfahren nach einem der vorangegangenen Ansprüche, **dadurch gekennzeichnet, dass**
die Ermittlung des Funktionszustands durch indirekte Erfassung der Lichtabgabe der Lichtabgabeeinrichtung in den Bilddaten erfolgt.

5. Verfahren nach einem der vorangegangenen Ansprüche, **dadurch gekennzeichnet, dass**
es sich bei dem Funktionszustand um eine Funktionsbereitschaft der Lichtabgabeeinrichtung handelt.

6. Verfahren nach einem der vorangegangenen Ansprüche, **dadurch gekennzeichnet, dass** es sich bei dem Funktionszustand um eine Leuchtcharakteristik der Lichtabgabeeinrichtung handelt.

7. Verfahren nach einem der vorangegangenen Ansprüche, **dadurch gekennzeichnet, dass**
für jede Lichtabgabeeinrichtung eine oder mehrere Soll-Lichtabgabecharakteristiken in einem Speicher hinterlegt sind und mit einer erfassten Ist-Lichtabgabe zur Ermittlung des Funktionszustands verglichen werden.

8. Vorrichtung zur Ermittlung von Funktionszuständen von Lichtabgabeeinrichtungen eines Fahrzeugs mittels eines Kamerasystems, wobei die Vorrichtung zur Umsetzung eines Verfahrens nach einem der vorangegangenen Ansprüche ausgebildet ist und wenigstens eine Steuerungseinrichtung umfasst, in der Bildverarbeitungsalgorithmen in Form von Software hinterlegt sind und die wenigstens eine Schnittstelle zum Empfang von Bilddaten wenigstens einer seitlich oder rückwärtig am Fahrzeug angeordneten Kamera aufweist.

## Claims

1. A method for determining functional states of light emission devices of a vehicle by means of a camera system,
**characterized in that**
image data are captured from at least one lateral area or rear area around the vehicle by means of at least one camera of a camera system, which camera is arranged laterally or in the rear at or in the vehicle, and **in that** at least one functional state of at least one light emission device arranged in the corresponding lateral area or rear area of the vehicle is determined by means of image processing of the image data.

2. The method according to Claim 1, **characterized in that** a diagnostic function is provided in which various light emission devices are actuated successively and the image processing is synchronized with the actuation in such a way that the functional state of the various light emission devices is determined successively.

3. The method according to any one of the preceding claims, **characterized in that** the determination of the functional state is carried out through direct detection of the light emission of the light emission device in the image data.

4. The method according to any one of the preceding claims, **characterized in that** the determination of the functional state is carried out through indirect detection of the light emission of the light emission device in the image data.

5. The method according to any one of the preceding claims, **characterized in that** the functional state is a functional readiness of the light emission device.

6. The method according to any one of the preceding claims, **characterized in that** the functional state is a lighting characteristic of the light emission device.

7. The method according to any one of the preceding claims, **characterized in that** one or more reference light emission characteristics is stored for each light emission device in a storage and compared with a captured actual light emission for determining the functional state.

8. Apparatus for determining functional states of light emission devices of a vehicle by means of a camera system, wherein the apparatus is configured to implement a method according to any one of the preceding claims and comprises at least one control device in which image processing algorithms are stored in the form of software, and the at least one interface for receiving image data has at least one camera which is arranged lateral to the vehicle or to the rear of the vehicle.

## Revendications

1. Procédé de détermination des états de fonctionnement de dispositifs d'émission lumineuse d'un véhicule au moyen d'un système de caméra,
**caractérisé en ce que**
des données d'image provenant d'au moins une zone sur le côté ou à l'arrière du véhicule sont captées au moyen d'au moins une caméra d'un système de caméra disposée latéralement ou à l'arrière sur ou dans le véhicule, et **en ce qu'**au moins un état de fonctionnement d'au moins un dispositif d'émission lumineuse situé dans la partie latérale ou arrière correspondante du véhicule est déterminé par traitement des données d'image.

2. Procédé selon la revendication 1, **caractérisé en ce qu'**une fonction de diagnostic est prévue, où différents dispositifs d'éclairage sont commandés successivement et le traitement d'image est synchronisé avec la commande de manière à déterminer successivement l'état de fonctionnement des différents dispositifs d'émission lumineuse.

3. Procédé selon l'une des revendications précédentes,
**caractérisé en ce que**
la détermination de l'état de fonctionnement est effectuée par détection directe de l'émission lumineuse du dispositif d'émission lumineuse dans les données d'image.

4. Procédé selon l'une des revendications précédentes,
**caractérisé en ce que**
la détermination de l'état de fonctionnement est effectuée par détection indirecte de l'émission lumineuse du dispositif d'émission lumineuse dans les données d'image.

5. Procédé selon l'une des revendications précédentes,
**caractérisé en ce que**
l'état de fonctionnement est une disponibilité fonctionnelle du dispositif d'émission lumineuse.

6. Procédé selon l'une des revendications précédentes,
**caractérisé en ce que** l'état de fonctionnement est une caractéristique lumière du dispositif d'émission lumineuse.

7. Procédé selon l'une des revendications précédentes,
**caractérisé en ce**
**qu'**une ou plusieurs caractéristiques d'émission lumineuse de consigne sont stockées dans une mémoire pour chaque dispositif d'émission lumineuse et sont comparées à une émission lumineuse effective détectée pour la détermination de l'état de fonctionnement.

8. Dispositif pour la détermination des états de fonctionnement de dispositifs d'émission lumineuse d'un véhicule au moyen d'un système de caméra, ledit dispositif étant prévu pour l'exécution d'un procédé selon l'une des revendications précédentes et comprenant au moins un dispositif de commande, où des algorithmes de traitement d'image sont mémorisés sous forme logicielle, et présentant au moins une interface pour la réception de données d'image d'au moins une caméra disposée latéralement ou à l'arrière sur le véhicule.
